# EUROPEAN PATENT SPECIFICATION

(11) **EP 2 628 804 B1**
(45) Date of publication and mention of the grant of the patent: **19.11.2014**
(21) Application number: 11832346.8
(22) Date of filing: 01.08.2011
(51) Int. Cl.: H01B 1/24, B62D 1/06, C14C 11/00, D06N 3/00

(54) **CONDUCTIVE LEATHER AND STEERING WHEEL**
LEITFÄHIGES LEDER UND LENKRAD DAMIT
CUIR CONDUCTEUR ET VOLANT DE DIRECTION

(30) Priority: 12.10.2010 JP 2010229228
(43) Date of publication of application: 21.08.2013
(73) Proprietor: Autoliv Development AB, 447 83 Vårgårda (SE)
(72) Inventor: SEKIYA, Yui, Yokohama-shi Kanagawa 222-8580 (JP); UEKI, Akira, Yokohama-shi Kanagawa 222-8580 (JP); KOBAYASHI, Kazunori, Kashiwa-shi Chiba 277-0804 (JP)
(74) Representative: Müller Verweyen
(86) International application number: PCT/JP2011/067597
(87) International publication number: WO 2012/049904

(56) References cited:
- WO-A1-02/38683
- WO-A1-2007/066513
- WO-A1-2009/139194
- JP-A- 5 331 500
- JP-A- 11 229 000
- JP-A- 2002 542 987

## Description

### TECHNICAL FIELD

The present invention relates to conductive leather having conductivity, and to a steering wheel in which that conductive leather is used.

### BACKGROUND ART

Vehicles are provided with a steering wheel (also referred to as a handle) for operating the travel direction of the vehicle. In an ordinary configuration of a steering wheel, a core material made of metal is leather-wrapped with a surface material that comprises natural or artificial leather. The steering wheel has a high frequency of use, inasmuch as the driver operates the steering wheel by gripping the latter with the hands during travel of the vehicle, and hence the surface material that is used in the steering wheel is required to have a high level of durability, in terms of wear resistance and the like.

Such being the case for instance, Patent Document 1 discloses a surface material that has a top coat, the surface roughness Ra of which is controlled so as to lie within a range from 0.5 µm to 30 µm in a normal condition, through addition of a micro-powder. By virtue of such a feature, Patent Document 1 allows securing sufficient wear resistance with a smaller film thickness.

Patent Document 1: Japanese Patent Application Publication No. 2006-307397

In recent years, research has been conducted with the aim of acquiring electrical information in the form of an electrocardiogram, pulse rate, heart rate and so forth (hereafter, collectively referred to as heart rate and the like) during driving of a vehicle, and using the acquired information for controlling the vehicle. The steering wheel is the place that is most often directly touched by the driver during driving. Accordingly, a demand exists for imparting conductivity to leather, which is the surface of the steering wheel directly touched by the driver, and to use that leather as an electrode.

Patent Document 2 discloses a steering wheel which comprises contact layers of an epoxy resin containing silver salt as conductive layer on a base material containing polyurethane resin. Said contact layers contact an electrode being electrically connected to a detector for biological information such as the heart rate of the driver.
Patent Document 2: WO2007/066513 A

A conceivable method of imparting conductivity to leather involves making leather into conductive leather by coating the latter with a conductive coating material. In some trials, leather was coated with a conductive coating material containing silver, which has the highest conductivity from among conductive materials, and that leather was used in the steering wheel. However, when using a conductive coating material containing silver, numerous fine cracks of about several mm appeared on the leather when this leather was stretched in the process of leather-wrapping the steering wheel with that coated leather. Also, using silver as a coating material resulted, in some instances, in poor dispersibility and uneven component distribution, and in poor mechanical properties such as anti-wear performance.

### DISCLOSURE OF THE INVENTION

In the light of above issues, it is an object of the present invention to provide conductive leather in which high conductivity and durability can be secured, and to provide a steering wheel in which such conductive leather is used.

In order to solve the above problem, a typical configuration of conductive leather according to the present invention is such that a coating layer formed of a base coat layer and a top coat layer made up of a resin are formed on the surface of natural or artificial leather; the top coat layer is formed of a first top coat layer formed on the base coat, and a second top coat layer formed on the first top coat layer; a resin used in the second top coat layer is crosslinked, a resin used in the first top coat layer is not crosslinked, and at least one of the first top coat layer and the second top coat layer contains carbon-based conductive particles.

In the above configuration, the resin used in the second top coat layer, which is the outermost layer, is crosslinked; as a result, it becomes possible to cure that resin and to enhance the durability of the top coat layer as a whole. On the other hand, a resin that is not crosslinked is used in the first top coat layer that underlies the second top coat layer; as a result, pliability can be secured by preventing excessive curing of the top coat layer, and it becomes possible to suppress the occurrence of cracks during stretching in the leather wrapping process. Conductivity can be imparted to the coating layer, and by extension to the leather, by incorporating carbon-based conductive particles, which among conductive materials do not exhibit cracks readily, into the top coat layer having had the hardness (pliability) thereof optimized in the above-described manner. Conductive leather in which high conductivity and durability are secured can be produced as a result.

Both the first top coat layer and the second top coat layer may contain the carbon-based conductive particles. Such a configuration elicits a yet a higher conductivity effect.

The base coat layer, which is formed on the surface of the leather, may have a layer having higher adhesiveness and pliability than the top coat layer. As a result, it becomes possible to enhance adhesiveness between the leather and the top coat, and to impart pliability to the entire coating layer.

In order to solve the above problem, the steering wheel according to the present invention, in a typical configuration, is leather-wrapped using the above-described conductive leather. As a result, the steering wheel can be used as an electrode, and electrical information can be acquired by way of the steering wheel.

The present invention succeeds in providing conductive leather in which high conductivity and durability can be secured, and in providing a steering wheel in which such conductive leather is used.

### BRIEF DESCRIPTION OF THE DRAWINGS

Fig. 1 is a diagram illustrating an example of a steering wheel that uses conductive leather according to the present embodiment; and
Fig. 2 is a cross-sectional diagram illustrating schematically an example of the specific layer build-up of the conductive leather of Fig. 1.

### EXPLANATION OF REFERENCE NUMERALS

100 ... steering wheel, 102 ... core material, 110 ... conductive leather, 112 ... leather, 114 ... coating layer, 116 ... base coat layer, 118 ... top coat layer, 118a ... first top coat layer, 118b ... second top coat layer

### BEST MODE FOR CARRYING OUT THE INVENTION

Preferred embodiments of the present invention will be explained next in detail with reference to accompanying drawings. Dimensions, materials, other specific numerical values, and the like given in the embodiments are only illustrative in character, for the sake of easier understanding of the invention, and, unless particularly stated otherwise, are not meant to limit the present invention in any way. In the description and the drawings, elements having substantially the same function and configuration are denoted by identical reference numerals, and a recurrent explanation thereof will be omitted. Elements that are not directly related to the present invention are omitted in the drawings.

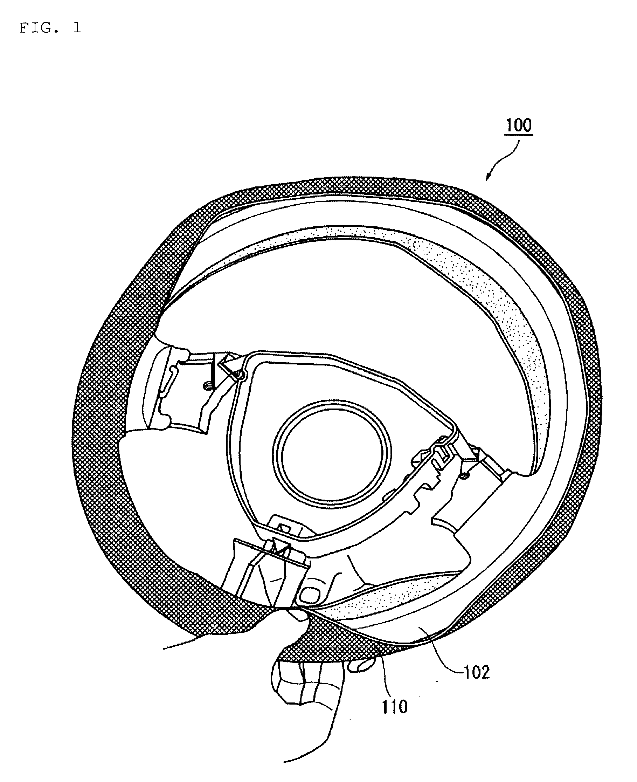

Fig. 1 is a diagram illustrating an example of a steering wheel 100 that uses conductive leather according to the present embodiment. As illustrated in Fig. 1, the steering wheel 100 of the present embodiment has a core material 102, made of metal, that is leather-wrapped with below-described conductive leather 110. As a result, the steering wheel 100 can be used as an electrode, and it becomes possible to acquire electrical information such as the heart rate of the driver.

In the present embodiment the conductive leather 110 is used in the steering wheel 100, but this is merely an example, and the embodiment is not limited thereto. In addition to the steering wheel 100, the below-described conductive leather 110 can be used in other members that are provided in the vehicle, and may be used also outside the vehicle.

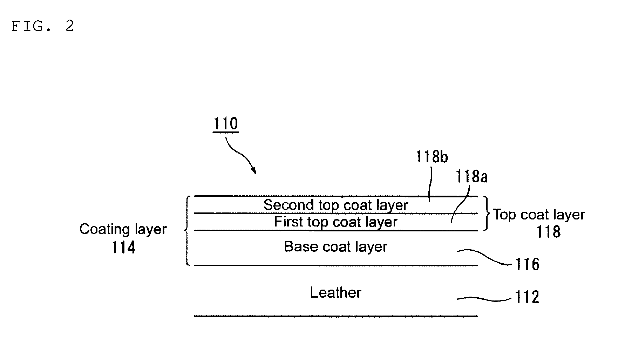

Fig. 2 is a cross-sectional diagram illustrating schematically an example of the specific layer build-up of the conductive leather 110 of Fig. 1. Hereafter, the conductive leather 110 of the present embodiment will be explained with reference to Fig. 2. The conductive leather 110 illustrated in Fig. 2 is produced by forming a coating layer 114 on the surface of leather 112.

Both natural leather and artificial leather can be appropriately used as the leather 112, which is the member to be coated by the coating layer 114. Examples of natural leather that may be used include, for instance, cowhide, horsehide, sheepskin, goatskin, pigskin, bird skin, reptile skin or the like. Examples of artificial leather that may be used include, for instance, vinyl chloride leather, urethane leather, vinyl leather or the like. The leather 112 is subjected to an appropriate treatment, for instance tanning and so forth, before the below-described coating layer 114 is formed on the leather 112. Such treatments are known to a person skilled in the art, and will be explained below in an abbreviated manner.

The tanning process is a treatment whereby the heat resistance of the leather 112 as well as the resistance of the latter against chemicals and microorganisms, is enhanced by way of tanning agents, and whereby pliability is imparted to the leather 112. Known tanning agents such as chromium compounds or aldehyde compounds can be used, as appropriate, as the tanning agents. After the tanning process (which may include, as the case may require, a re-tanning process after the tanning process), the leather is subjected to a dyeing process using dyes. Thereafter, the leather undergoes a fixing treatment by formic acid.

A fatliquoring process follows the fixing treatment. In the fatliquoring process, the leather is treated using a fatliquoring agent (lubricant) to prevent thereby agglutination of the fibers in the leather 112, and secure pliability in the latter. The fatliquoring agent may be an anionic fatliquoring agent, a cationic fatliquoring agent, an amphoteric fatliquoring agent, a nonionic fatliquoring agent, neutral oil or the like. The leather 112 after the fatliquoring process is dewatered, using a setting machine, in a setter process, and is thereafter dried in a hang-drying process. Thereafter, the surface area of the leather is expanded through stretching in a vibration process, using a vibration machine. The leather 112 after the vibration process has the fibers thereof loosened in a milling process, and, thereafter, the leather is hot-air dried in a toggling drying process, and is subjected again to a vibration process.

The coating layer 114 is formed on the leather 112 having been treated as a result of the above processes. The coating layer 114 is formed through coating of a coating material onto the surface of the leather 112. In the present embodiment, the coating layer 114 has a three-layer structure wherein a base coat layer 116, a first top coat layer 118a and a second top coat layer 118b (hereafter, the first top coat layer 118a and the second top coat layer 118b are referred to collectively as top coat layer 118) are sequentially formed from the surface side of the leather 112.

The base coat layer 116, which is formed on the surface of the leather 112, is a layer having higher adhesiveness and pliability than the top coat layer 118. As a result, it becomes possible to enhance the adhesiveness between the leather 112 and the top coat layer 118, and to impart pliability to the coating layer 114. The first top coat layer 118a is a layer formed on the base coat layer 116, and the second top coat layer 118b is a layer formed on the first top coat layer 118a. As explained below, these two layers impart conductivity to the coating layer 114, and, by extension, to the conductive leather 110.

The base coat layer 116, the first top coat layer 118a and the second top coat layer 118b are obtained through coating of respective dissimilar coating materials. For the sake of easier comprehension, materials shared by all these coating materials will be explained in detail, followed by an explanation of the materials that are specific to each layer.

In the present embodiment, the coating materials contain a resin component and a solvent. Examples of resin components that can be appropriately used include, for instance, polyurethane resins, (meth)acrylic resins, polyester resins, vinyl ester resins, alkyd resins, silicone resins, nitrocellulose resins, cellulose ester resins, silicone-modified acrylic resins, fluorine-modified acrylic resins, epoxy resins, silicone-modified acrylic resins, fluorine-modified acrylic resins, epoxy resins, casein and the like. These resins may be used as a single type alone, or in the form of mixtures of two or more types.

The solvent may be either an aqueous solvent or an organic solvent, but is preferably an aqueous solvent, from the viewpoint of environmental concerns as well as health and safety concerns. The coating material that is used may be processed into, for instance, an emulsion form in which the above-described resin component is dispersed in an aqueous or organic solvent.

In the present embodiment, a crosslinking agent is added to the coating material that forms the second top coat layer 118b, to elicit thereby crosslinking of the resin (resin component) that is used in the second top coat layer 118b. As a result, it becomes possible to enhance the wear resistance and the heat resistance of the second top coat layer 118b (coating film), and to enhance the durability of the top coat layer 118 as a whole. For instance, an isocyanate compound, aziridine or an epoxy compound can be appropriately used as the crosslinking agent. If the proportion of crosslinking agent is excessive, the coating film becomes hard and the feel thereof is impaired. Preferably, therefore, the blending ratio of the crosslinking agent with respect to the resin component is set to be 30% or less.

In the present embodiment, the resin used in the second top coat layer 118b is subjected to crosslinking, but the resin used in the first top coat layer 118a is not subjected to crosslinking (no crosslinking agent is added to the coating material that forms the first top coat layer 118a). As a result, it becomes possible to secure pliability while avoiding excessive curing of the top coat layer 118 as a whole, and it becomes possible to suppress the occurrence of cracks upon stretching during leather-wrapping around the core material 102.

Next, as a further characterizing feature of the present embodiment, the coating material that is used in the first top coat layer 118a and the second top coat layer 118b contains a conductive pigment. In other words, the coating material that forms the first top coat layer 118a and the second top coat layer 118b is a conductive coating material.

In the present embodiment, carbon-based conductive particles are used in the conductive pigment. As a result, it becomes possible to suppress the occurrence of cracks in the coating layer 114 while imparting conductivity to the coating layer 114 and, by extension, to the leather 112. Carbon-based conductive particles are preferred in that they boast superior economy and oxidation resistance, and make for ready hue adjustment in black leather articles.

As the carbon-based conductive particles there can be used, specifically, acetylene black, furnace black, Ketjen black or the like. The foregoing may be used singly or in combinations of two or more types. The carbon-based conductive particles that are used may be of any shape, for instance spherical, flake-like, needle-like, dendritic or the like. Carbon nanotubes may be included in order to enhance conductivity.

The average particle size of the carbon-based conductive particles ranges preferably from 50 nm to 2000 nm; more preferably the average particle size of the carbon-based conductive particles may range from 100 nm to 1000 nm. That is because the smoothness of the coating film surface and storage stability are impaired if the average particle size exceeds 2000 nm, while if the average particle size is below 50 nm, the hiding power of coating (coating film) is weakened and it becomes difficult for the carbon-based conductive particles to disperse into the conductive coating material.

Ordinarily, carbon-based conductive particles have a hydrophobic surface. Accordingly, it is preferable to enhance the dispersibility of the carbon-based conductive particles by rendering the surface characteristic thereof hydrophilic as a result of a surface treatment (chemical treatment), in cases where the above-described solvent is aqueous, i.e. in cases where the conductive coating material of the present embodiment is an aqueous coating material.

Examples of a main surface treatment method include, for instance, an oxidation treatment, for instance using nitric acid, hypochlorous acid, ozone, hydrogen peroxide, corona discharge or plasma; a dry-type surface treatment that involves adding an appropriate amount of a silane coupling agent, directly or diluted in an organic solvent or the like, while the carbon-based particles are being stirred in a Henschel mixer or the like; or a spray surface treatment that involves spraying a silane coupling agent onto a slurry obtained by dispersing the carbon-based particles in an organic solvent or in water. As the silane coupling agent there is preferably used a silane coupling agent having a hydrophilic functional group, such as an amino group, a glycidyl group, a mercapto group or the like.

Carbon-based conductive particles obtained through a surface treatment such as the above-described ones can be dispersed appropriately in water. Dispersion of the carbon-based conductive particles may be accomplished using a stirrer or dispersing machine that can impart shear forces to the particles. Specifically, there can be used a dissolver, a homo-mixer, a Henschel mixer, a ball mill, a paint shaker, a roll, a jet mill, an ultrasonic dispersing apparatus or the like. A hydrophilic organic solvent, dispersant, surfactant or the like may be appropriately added at this time, as the case may require. The carbon-based conductive particles may be added to another constituent component, and may be used kneaded beforehand together with a binder resin, or after dispersion in water or in an organic solvent.

In the present embodiment, an example has been explained of a configuration wherein carbon-based conductive particles, which are a conductive pigment, are incorporated in both coating materials that make up the first top coat layer 118a and the second top coat layer 118b. Such a configuration allows achieving a higher conductivity effect. However, the above configuration is just an example, and it suffices that the carbon-based conductive particles be incorporated in at least one from among the first top coat layer 118a and the second top coat layer 118b, such that a sufficient conductivity effect can be elicited even if only one of the top coat layers contains the particles. In a case where the carbon-based conductive particles are incorporated into either the first top coat layer 118a or the second top coat layer 118b, then the carbon-based conductive particles are preferably incorporated into the second top coat layer 118b, which is the outermost layer, in terms of, for instance, physical strength and feel.

The coating material of the present embodiment (conductive coating material in the first top coat layer 118a and the second top coat layer 118b) is produced by mixing the above-described constituent materials using a stirrer or a dispersing machine that is capable of imparting shear forces. As already explained, a dissolver or the like can be used as the stirrer or dispersing machine that is capable of imparting shear forces. Various coloring agents, dispersing agents, antifoaming agents, UV absorbers, antioxidants, waxes, matting agents, plasticizers and the like may be appropriately included in the formulation, as the case may require, in amounts that do not preclude achieving the object the present invention.

As the case may require, foreign matter and aggregated particles may be separated and removed, using filter paper or filter cloth, from the coating material produced as described above. Thereafter, the base coat layer 116 and the coating layer 114 that comprises the first top coat layer 118a and the second top coat layer 118b are formed on the leather 112, through sequential coating of the surface of the leather 112. The coating method that is resorted to may be any known method, for instance a roll coater method, a spraying method, an aerosol method or the like.

The leather 112 having the coating layer 114 formed thereon is subjected to a re-milling process and a vibration process, to yield the conductive leather 110. The treatment processes of the leather before and after formation of the coating layer 114 are examples of conspicuously ordinary processes, and are not limited to those in the example. Therefore, not all the plurality of processes explained above need be performed, while other process may be performed as the case may require.

As described above, the conductive leather 110 according to the present embodiment allows enhancing durability, by virtue of the second top coat layer 118b in which a resin is crosslinked, while securing pliability by virtue of the first top coat layer 118a in which a resin is not crosslinked. Conductivity can be imparted to the leather by incorporating carbon-based conductive particles, which do not exhibit cracks readily, into the top coat layer 118 having had the hardness (pliability) thereof thus optimized. As a result, it becomes possible to suppress the occurrence of cracks during stretching in the leather wrapping process, to produce conductive leather in which high conductivity and durability are secured, and to use the steering wheel as an electrode, by exploiting such conductive leather.

Preferred embodiments of the present invention have been explained above with reference to accompanying drawings, but the described embodiments are exemplary, and the invention may be embodied and implemented in other ways, in accordance with various methods. Unless specifically indicated in the description of the present application, the invention is not restricted by the shape, size, configurational arrangement and so forth of the detailed parts depicted in the drawings. The expressions and terms used in the description of the present application are explanatory in purpose, and are not meant to be limiting in any way, unless restricting subject matter to that effect is specifically set forth in the description.

### INDUSTRIAL APPLICABILITY

The present invention can be used in conductive leather having conductivity, and in a steering wheel in which such conductive leather is used.

## Claims

1. Conductive leather (110), wherein
a coating layer (114) formed of a base coat layer (116) and a top coat layer (118) made up of a resin is formed on the surface of natural or artificial leather;
the top coat layer (118) is formed of a first top coat layer (118a) formed on the base coat, and a second top coat layer (118b) formed on the first top coat layer (118a);
a resin used in the second top coat layer (118b) is crosslinked, a resin used in the first top coat layer (118a) is not crosslinked, and at least one of the first top coat layer (118a) and the second top coat layer (118b) contains carbon-based conductive particles.

2. The conductive leather (110) according to claim 1, wherein both the first top coat layer (118a) and the second top coat layer (118b) contain the carbon-based conductive particles.

3. A steering wheel (100), which is leather-wrapped using the conductive leather (110) according to any one of claims 1 to 2.

## Patentansprüche

1. Leitfähiges Leder (110), wobei
eine Überziehungsschicht (114), welche aus einer Basisüberzugsschicht (116) und einer aus Harz ausgeführten oberen Überzugsschicht (118) gebildet ist, auf der Oberfläche von natürlichem oder künstlichem Leder gebildet ist;
die obere Überzugsschicht (118) aus einer ersten oberen Überzugsschicht (118a), welche auf dem Basisüberzug gebildet ist, und einer zweiten oberen Überzugsschicht (118b) gebildet ist, welche auf der ersten oberen Überzugsschicht (118a) gebildet ist;
ein Harz, welches in der zweiten oberen Überzugsschicht (118b) verwendet ist, quervernetzt ist, ein Harz, welches in der ersten oberen Überzugsschicht (118a) verwendet ist, nicht quervernetzt ist, und zumindest eine der ersten oberen Überzugsschicht (118a) und der zweiten oberen Überzugsschicht (118b) Kohlenstoffbasierte leitfähige Partikel enthält.

2. Leitfähiges Leder (110) nach Anspruch 1, wobei sowohl die erste obere Überzugsschicht (118a) als auch die zweite obere Überzugsschicht (118b) die Kohlenstoff-basierten leitfähigen Partikel enthalten.

3. Lenkrad (100), welches unter Verwendung des leitfähigen Leders (110) nach einem der Ansprüche 1 bis 2 Leder-ummantelt ist.

## Revendications

1. Cuir conducteur (110), dans lequel
une couche de revêtement (114) composée d'une couche de revêtement de base (116) et d'une couche de revêtement supérieure (118) constituée de résine est formée sur la surface d'un cuir naturel ou artificiel ;
la couche de revêtement supérieure (118) est composée d'une première couche de revêtement supérieure (118a) formée sur le revêtement de base, et d'une seconde couche de revêtement supérieure (118b) formée sur la première couche de revêtement supérieure (118a) ;
une résine utilisée dans la seconde couche de revêtement supérieure (118b) est réticulée, une résine utilisée dans la première couche de revêtement supérieure (118a) n'est pas réticulée, et la première couche de revêtement supérieure (118a) et/ou la seconde couche de revêtement supérieure (118b) contient/contiennent des particules conductrices à base de carbone.

2. Cuir conducteur (110) selon la revendication 1, dans lequel aussi bien la première couche de revêtement supérieure (118a) que la seconde couche de revêtement supérieure (118b) contiennent les particules conductrices à base de carbone.

3. Volant (100) gainé de cuir, mettant en oeuvre le cuir conducteur (110) selon l'une quelconque des revendications 1 à 2.
